# EUROPEAN PATENT APPLICATION

(11) **EP 4 459 745 A1**
(43) Date of publication of application: **06.11.2024**
(21) Application number: 24170119.2
(22) Date of filing: 12.04.2024
(51) Int. Cl.: H01M 10/653, H01M 10/659, H01M 50/293, H01M 10/6556, H01M 10/6557, H01M 50/258, H01M 10/658, H01M 50/22, H01M 50/244

(54) **BATTERY MODULE AND BATTERY PACK INCLUDING THE SAME**

(30) Priority: 24.04.2023 KR 20230053234
(71) Applicant: SK On Co., Ltd., Seoul 03161 (KR)
(72) Inventor: KIM, Se Hyeon, 34124 Daejeon (KR)
(74) Representative: Stolmár & Partner Patentanwälte PartG mbB

(57) **Abstract**

A battery pack including a pack housing including a beam partitioning an internal space; a plurality of battery modules including a plurality of battery cells and accommodated in each of spaces partitioned by the beam of the pack housing; and a barrier disposed in at least one an outside of the battery module and an inside of the battery module, wherein the barrier includes a barrier housing; a phase change material (PCM) inserted into an inside of the barrier housing and melting at a predetermined temperature or higher; and a discharge hole provided in the barrier housing and through which the molten phase change material is discharged, is disclosed.

## Description

### TECHNICAL FIELD

The technology and implementations disclosed in this patent document generally relate to a battery module and a battery pack.

### BACKGROUND

A secondary battery refers to a battery that may be repeatedly charged and discharged because mutual conversion between chemical energy and electrical energy is reversible.

The secondary battery may be used as an energy source for electric vehicles, hybrid vehicles, energy storage systems (ESS), but is not limited thereto which have recently attracted attention, including mobile devices.

The secondary battery may be used in the form of electrically connected multiple battery cells manufactured as flexible pouch-type battery cells or rigid prismatic or cylindrical can-type battery cells. In particular, in the electric vehicles but is not limited thereto that require high output characteristics, a battery module in which a plurality of cell stacks in which a plurality of battery cells are stacked are electrically connected, or a battery pack in which a plurality of battery modules are electrically connected, may be used.

Meanwhile, battery cells may have advantages of being able to store energy at high density, but fires may occur for various reasons. Such risk may be further increased in battery packs.

Accordingly, battery modules and packs should be equipped with a structure for delaying or blocking heat propagation between adjacent battery cells or modules in the event of a fire.

The battery pack according to the disclosure can improve safety in a heat event situation.

### SUMMARY

The disclosure may be implemented in some embodiments to provide a battery pack having improved safety under event situations due to heat.

In some embodiments of the disclosed technology, a battery pack comprises a pack housing including a beam partitioning an internal space; a plurality of battery modules including a plurality of battery cells and accommodated in each of spaces partitioned by the beam of the pack housing; and a barrier disposed in at least one an outside of the battery module and an inside portion of the battery module, wherein the barrier includes a barrier housing; a phase change material (PCM) inserted into an inside of the barrier housing and melting at a predetermined temperature or higher; and a discharge hole provided in the barrier housing and through which the molten phase change material is discharged.

According to an embodiment of the disclosure of this patent document, the barrier may comprise a first barrier disposed between battery modules disposed adjacent to the internal space or between the battery module and the beam; and a second barrier disposed between adjacent battery cells within the battery module.

According to an embodiment of the disclosure of this patent document, the beam may include a cross beam partitioning the internal space in a length direction of the pack housing, and wherein the first barrier may be disposed between the cross beam and the battery module.

According to an embodiment of the disclosure of this patent document, the barrier may have one of a first state in which the inside of the barrier housing is filled with the phase change material (PCM) and a second state in which the inside of the barrier housing is filled with air.

According to an embodiment of the disclosure of this patent document, the barrier housing may be formed of a metal material including at least one of stainless steel, aluminum, or iron, or a plastic engineering material.

According to an embodiment of the disclosure of this patent document, one side of the first barrier may be in contact with the battery module, and the other side of the first barrier may be in contact with the battery module or the beam.

According to an embodiment of the disclosure of this patent document, one side and the other side of the second barrier may be in contact with adjacent battery cells, respectively.

According to an embodiment of the disclosure of this patent document, the first barrier may have a length, longer than a length of the second barrier, at least in a height direction of the battery cell.

According to an embodiment of the disclosure of this patent document, the discharge hole may be provided as a plurality of discharge holes on both sides of the barrier in an extension direction thereof, respectively, in a height direction of the barrier.

According to an embodiment of the disclosure of this patent document, a gap may be formed between the first barrier and the pack housing in an extension direction of the first barrier.

According to an embodiment of the disclosure of this patent document, the battery module may include a busbar assembly disposed on both sides of the battery cell in a length direction, wherein a gap may be formed between the second barrier and the busbar assembly in an extension direction of the second barrier.

According to an embodiment of the disclosure of this patent document, a cooling plate cooling the plurality of battery modules may be further disposed between the plurality of battery modules and a bottom surface of the pack housing.

In some embodiments of the disclosed technology, A battery module includes a plurality of battery cells arranged in one direction; a busbar assembly disposed on both sides of the battery cell in a length direction thereof; and a barrier disposed between adjacent battery cells to separate some of the plurality of battery cells, wherein the barrier includes a barrier housing; a phase change material (PCM) inserted into an inside of the barrier housing and melting at a predetermined temperature or higher; and a discharge hole provided in the barrier housing and through which the molten phase change material is discharged.

According to an embodiment of the disclosure of this patent document, the barrier may be disposed such that the barrier housing is in contact with the adjacent battery cells, wherein the barrier housing may be formed of a metal material including at least one of stainless steel, aluminum, or iron, or a plastic engineering material.

According to an embodiment of the disclosure of this patent document, the barrier may be extended in a length direction of the battery cell, and wherein the discharge hole may be provided as a plurality of discharge holes on both sides of the barrier in an extension direction thereof, respectively, in a height direction of the barrier.

According to an embodiment of the disclosure of this patent document, a gap may be formed between the barrier and the busbar assembly in the extension direction of the barrier.

### BRIEF DESCRIPTION OF DRAWINGS

Certain aspects, features, and advantages of the disclosed technology may be illustrated by the following detailed description with reference to the accompanying drawings.
FIG. 1 is a schematic exploded perspective view of a battery pack according to an embodiment of the disclosure of this patent document.
FIG. 2A is a cross-sectional view of FIG. 1, taken along line I-I'.
FIG. 2B is a cross-sectional view taken along line I-I' according to another embodiment of FIG. 1.
FIG. 3 is a schematic exploded perspective view of a battery module according to an embodiment of the disclosure of this patent document.
FIG. 4 is an enlarged view of portion A of FIG. 3.
FIG. 5 is a perspective view of a barrier according to an embodiment of the disclosure of this patent document.
FIG. 6 is a view illustrating an operation of a barrier, when ignited, according to an embodiment of the disclosure of this patent document.
FIG. 7 is a view illustrating a first path through which molten phase change material (PCM) is discharged.
FIG. 8 is a view illustrating a second path through which molten phase change material (PCM) is discharged.
FIG. 9A is a view illustrating a first function of a barrier according to an embodiment of the disclosure of this patent document.
FIG. 9B is a view illustrating a first function of a barrier according to an embodiment of the disclosure of this patent document.
FIG. 10 is a view illustrating a second function of a barrier according to an embodiment of the disclosure of this patent document.

### DETAILED DESCRIPTION

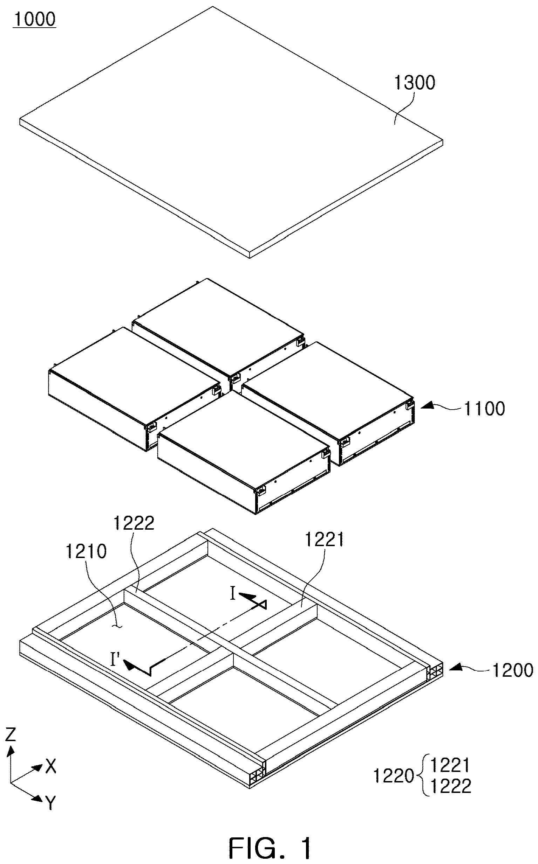

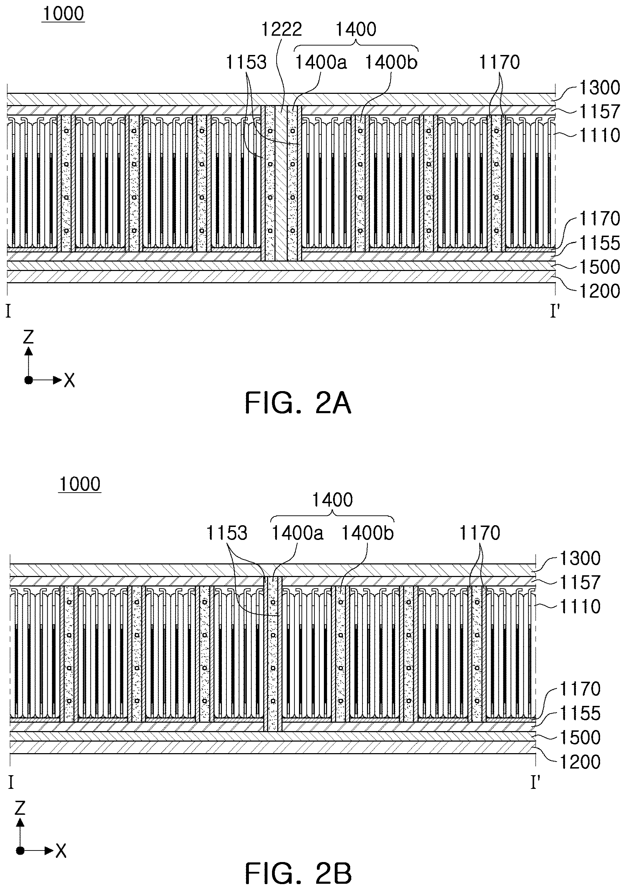

FIG. 1 is a schematic exploded perspective view of a battery pack according to an embodiment of the disclosure of this patent document, FIG. 2A is a cross-sectional view of FIG. 1, taken along line I-I', and FIG. 2B is a cross-sectional view taken along line I-I' according to another embodiment of FIG. 1.

A battery pack 1000 according to the disclosure includes a plurality of battery modules 1100, a pack housing 1200, and a barrier 1400.

The plurality of battery modules 1100 may be accommodated in the pack housing 1200, and a pack cover 1300 may be coupled thereto. Although not illustrated in the drawings, the pack housing 1200 may also accommodate a battery management system (BMS) controlling the plurality of battery modules 1100, in addition to the plurality of battery modules 1100.

The pack housing 1200 may be provided with an internal space 1210 to accommodate the plurality of battery modules 1100. Additionally, the internal space 1210 may be partitioned in at least one of a length direction (X-direction) or a width direction (Y-direction) of the pack housing 1200.

In an embodiment, the pack housing 1200 includes a beam 1220 partitioning the internal space 1210 in one of the length direction or the width direction. For example, the beam 1220 may include a center beam 1221 extending in the length direction (X-direction) of the pack housing 1200 and partitioning the internal space 1210 in the width direction (Y-direction) of the pack housing 1200, and/or a cross beam 1222 extending in the width direction (Y-direction) of the pack housing 1200 and partitioning the internal space 1210 in the length direction (X-direction) of the pack housing 1200.

In an embodiment, referring to FIG. 1, the plurality of battery modules 1100 may be individually accommodated in a plurality of spaces partitioned by the center beam 1221 and the cross beam 1222. In some cases, one of the center beam 1221 and the cross beam 1222 may be omitted, or the plurality of battery modules 1100 is accommodated in each of the spaces partitioned by the center beam 1221 and/or the cross beam 1222.

According to an embodiment of the disclosure of this patent document, the battery pack 1000 includes a barrier 1400 disposed in at least one an outside of a battery module 100 and an inside of the battery module 1100. The barrier 1400 may block or delay heat propagation between adjacent battery cells 1110 in the battery module 1100 or between adjacent battery modules 1100 in the battery pack 1000 when an event occurs due to heat (e.g., fire, etc.).

The barrier 1400 may include a first barrier 1400a disposed outside of the battery module 1100, and a second barrier 1400b disposed inside the battery module 1100. In particular, the first barrier 1400a disposed outside of the battery module 1100 may be disposed in a gap provided between the battery module 1100 and the pack housing 1200 and/or between adjacent battery modules 1100.

In an embodiment, the first barrier 1400a may be disposed between the battery modules 1100 disposed adjacent to the internal space 1210 or the battery module 1100 and the beam 1220. More specifically, the first barrier 1400a may be disposed between the battery module 1100 and the cross beam 1222, as illustrated in FIG. 2A, or between the battery modules 1100 as illustrated in FIG. 2B. FIG. 2B corresponds to a case in which the pack housing 1200 does not include the cross beam 1222 or a case in which the plurality of battery modules 1100 are disposed in each of the spaces partitioned by the center beam 1221 and the cross beam 1222.

The second barrier 1400b may be disposed between adjacent battery cells 1110 in the battery module 1100, and a detailed description thereof will be provided later.

Referring to FIGS. 2A and 2B, a cooling plate 1500 may be further disposed between the plurality of battery modules 1100 and a bottom surface of the pack housing 1200 to cool the plurality of battery modules 1100. The cooling plate 1500 may be disposed to entirely cover the bottom surface of the pack housing 1200. According to an embodiment of the disclosure of this patent document, the cooling plate 1500 may contribute to efficient cooling of the battery module 1100 together with the barrier 1400.

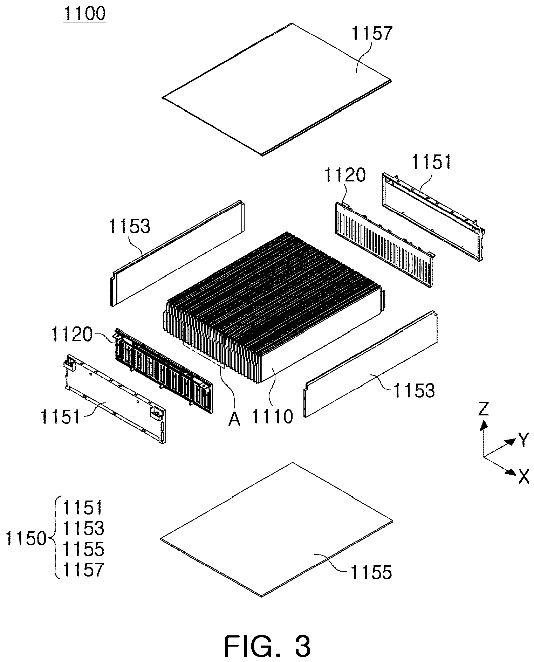

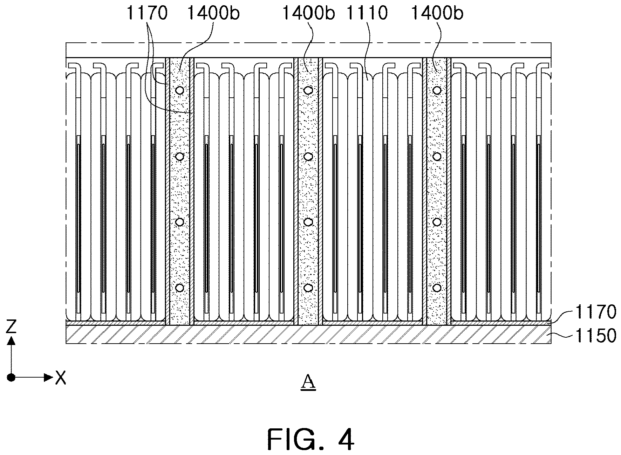

FIG. 3 is a schematic exploded perspective view of a battery module according to an embodiment of the disclosure of this patent document, and FIG. 4 is an enlarged view of portion A of FIG. 3.

According to an embodiment of the disclosure of this patent document, a battery module 1100 includes a plurality of battery cells 1110, a busbar assembly 1120, and a module housing 1150 disposed outside them. In addition, preferably, a second barrier 1400b disposed between the plurality of battery cells 1110 may be further included.

According to an embodiment of the disclosure of this patent document, the plurality of battery cells 1110 may be pouch cells. The plurality of battery cells 1110 may be arranged in one direction to form a cell stack. For example, the plurality of battery cells 1110 may be arranged in a length direction (X-direction) of a pack housing 1200. The disclosure of this patent document is not limited thereto, and the plurality of battery cells 1110 may be arranged in a width direction (Y-direction) of the pack housing 1200.

The busbar assembly 1120 may be disposed on both sides of the battery cell 1110 in a length direction thereof. The busbar assembly 1120 may include a busbar electrically connected to the battery cell 1110, and a busbar frame on which the busbar is disposed. The battery cell 1110 may have electrode tabs drawn out on both sides in a length direction thereof, and adjacent battery cells 1110 in the battery module 1100 may be electrically connected through the electrode tabs. For example, the electrode tab of the battery cell 1110 may sequentially pass through the busbar frame and the busbar, and may be then welded to the busbar.

Referring to FIG. 3, the battery module 1100 may include the plurality of battery cells 1110 and the module housing 1150 disposed outside the busbar assembly 1120. The module housing 1150 may include a side cover 1151 disposed on an outermost side in a length direction (Y-direction) of the plurality of battery cells 1110, an end cover 1153 disposed on an outermost side in an arrangement direction (X-direction) of the plurality of battery cells 1110, a lower cover 1155 disposed below the plurality of battery cells 1110, and an upper cover 1157 disposed upward the plurality of battery cells 1110.

In an embodiment of the disclosure of this patent document, a first barrier 1400a may be disposed on one side of the module housing 1150 provided in a direction in which the battery module 1100 is disposed in a battery pack 1000. For example, when the battery module 1100 is disposed in the arrangement direction (X-direction) of the battery cells 1110 in the battery pack 1000, the first barrier 1400a may be disposed on one side (outside) of the end cover 1153 disposed on the outermost side in the arrangement direction of the battery cells 1110. As another example, when the battery module 1100 is disposed in the length direction (Y-direction) of the battery cells 1110 in the battery pack 1000, the first barrier 1400a may be disposed on one side (outside) of the side cover 1151 disposed on the outermost side in the length direction of the battery cell 1110. Referring to FIG. 4, the battery module 1100 may include the second barrier 1400b. As illustrated in FIG. 4, the second barrier 1400b may be disposed between adjacent battery cells 1110 in the battery module 1100. In the battery modules 1100, a plurality of battery cells 1110 may be disposed on at least one side of the second barrier 1400b. Alternatively, the second barrier 1400b may be disposed at intervals of n (n: natural number) battery cells 1110.

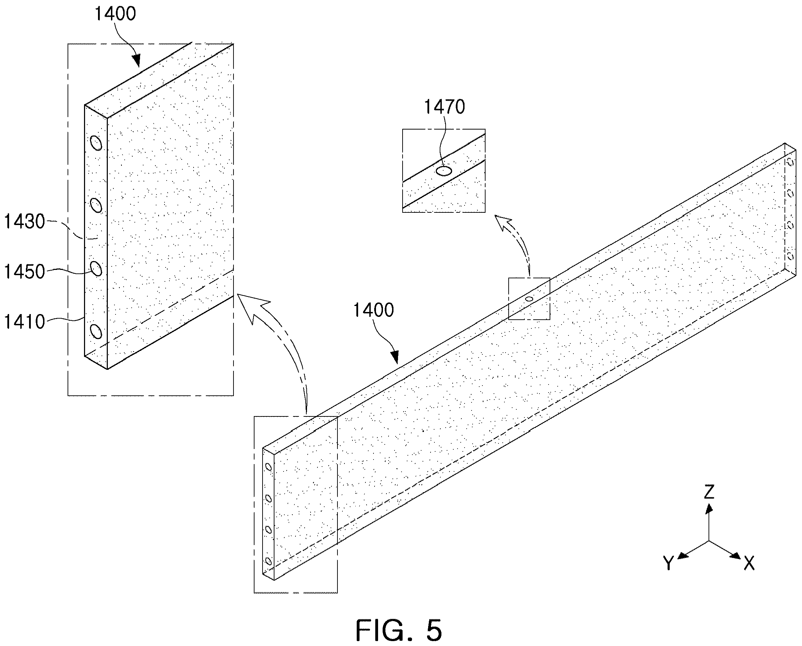

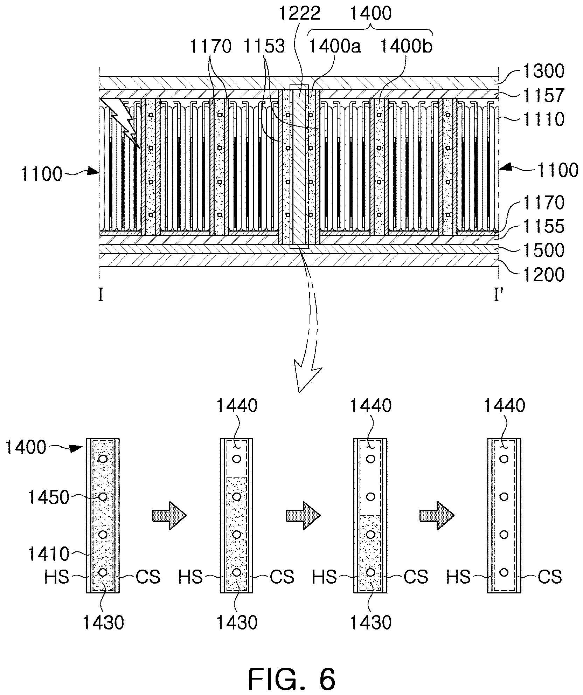

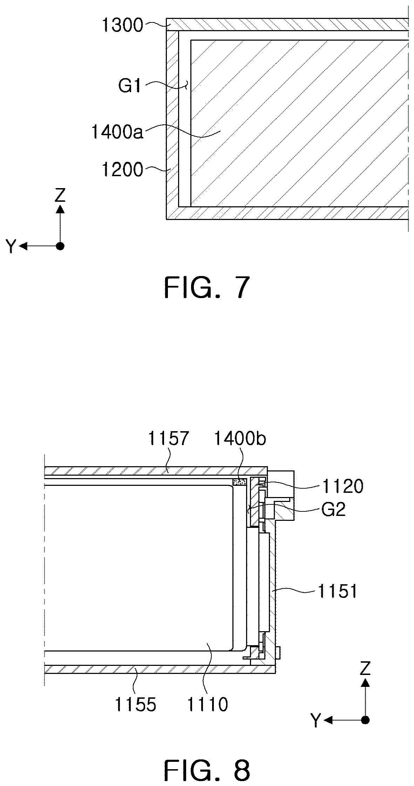

FIG. 5 is a perspective view of a barrier according to an embodiment of the disclosure of this patent document, and FIG. 6 is a view illustrating an operation of a barrier, when ignited, according to an embodiment of the disclosure of this patent document. Additionally, FIG. 7 is a view illustrating a first path through which molten phase change material (PCM) is discharged, and FIG. 8 is a view illustrating a second path through which molten phase change material (PCM) is discharged.

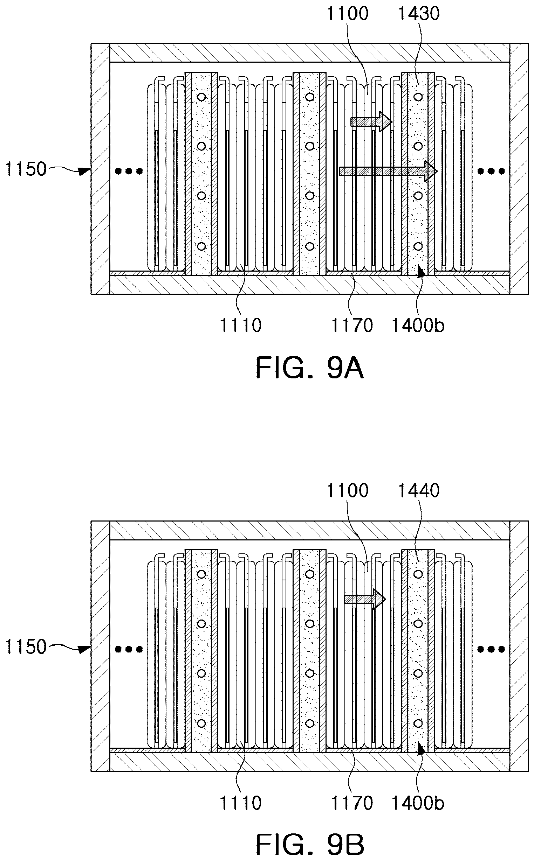

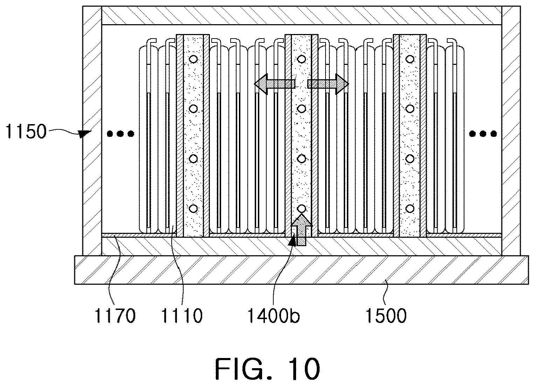

Additionally, FIG. 9 is a view illustrating a first function of a barrier according to an embodiment of the disclosure of this patent document, and FIG. 10 is a view illustrating a second function of a barrier according to an embodiment of the disclosure of this patent document.

Referring to FIG. 5, a barrier 1400 includes a barrier housing 1410, a phase change material (PCM) 1430 inserted into the barrier housing 1410, and a discharge hole 1450 and an injection hole 1470, provided in the barrier housing 1410.

The barrier 1400 may be extended in one direction. The barrier 1400 may be extended in a length direction of the battery cell 1110. For example, the barrier housing 1410 may be an exterior of the barrier 1400, and may be extended in one direction. The barrier housing 1410 may be disposed outside or inside a battery module 1100 such that an extension direction thereof is parallel to a length direction of a battery cell 1110.

According to an embodiment of the disclosure of this patent document, a first barrier 1400a disposed outside of the battery module 1100 may have a length longer in at least one direction, as compared to a second barrier 1400b disposed inside the battery module 1100.

For example, the second barrier 1400b disposed between the plurality of battery cells 1110 may have a length similar to that of the battery cells 1110, but the first barrier 1400a may be disposed outside of the battery module 1100, and may thus have a longer length in a length direction (Y-direction) thereof, as compared to the battery cell 1110 or the second barrier 1400b. In addition, the second barrier 1400b may have a similar height to the battery cell 1110, but the first barrier 1400a may be disposed outside of the battery module 1100, and may thus have a longer length in a height direction (Z-direction), as compared to the battery cell 1110 or the second barrier 1400b.

According to an embodiment of the disclosure of this patent document, the barrier housing 1410 may be formed of a material having structural rigidity and thermal conductivity. Effects of the barrier housing 1410 being formed of a material having high thermal conductivity will be described later.

An inside of the barrier housing 1410 is filled with the phase change material 1430, which is in a solid state, melting at a predetermined temperature or higher. The barrier 1400 may be structurally more robust because the barrier housing 1410, which forms an exterior, may be formed of a metal material with structural rigidity, and an inside thereof may be filled with the phase change material 1430, which is in a solid state. Therefore, structural damage to adjacent battery cells 1110 or battery modules 1100 due to explosion-induced pressure may be prevented at the beginning of an event.

When a temperature of the battery cell 1110 and/or the battery module 1100 rises at a predetermined temperature or higher and combustion thereof begins, heat generated from the battery cell 1110 and/or the battery module 1100 may be absorbed while the phase change material 1430 melts. A barrier 1400 is disposed between adjacent battery cells 1110 to separate some of the plurality of battery cells 1100. For example, according to an embodiment of the disclosure of this patent document, even when a battery cell 1110 and/or a battery module 1100 is in a fire or in a high temperature state immediately before occurrence of the fire, heat may be absorbed by a barrier 1400 adjacent thereto, such that heat propagation to other battery cells 1110 and/or battery modules 1100, separated therefrom by the barrier 1400, may be blocked or delayed. A discharge hole 1450 is provided in the barrier housing 1410. In particular, after all of the phase change material 1430 inserted into the barrier housing 1410 is discharged through the discharge hole 1450, the barrier 1400 may function as an air gap 1440 to block or delay heat propagation between adjacent battery cells 1110 and/or battery modules 1100, spaced apart from each other, based on the barrier 1400.

The above-described phase change material 1430 may be injected through the injection hole 1470 provided in an upper surface of the barrier housing 1410 to fill an inside of the barrier housing 1410. Additionally, the molten phase change material 1430 may be discharged outside the barrier housing 1410 through discharge holes 1450 provided in both sides of the barrier housing 1410 in an extension direction thereof.

According to an embodiment of the disclosure of this patent document, a plurality of discharge holes 1450 may be provided in a height direction of the barrier housing 1410 on both sides of the barrier housing 1410 in the extension direction thereof. In this case, the height direction of the barrier housing 1410 provided with the plurality of discharge holes 1450 may correspond to a melting direction of the phase change material 1430.

For example, the phase change material 1430 may melt at a predetermined temperature or higher from an upper portion above the barrier housing 1410 in a downward direction, as illustrated in FIG. 6. Therefore, the molten phase change material 1430 (hereinafter, referred to as molten liquid) may be first discharged through an uppermost discharge hole, among the plurality of discharge holes 1450, and may be discharged sequentially through the discharge hole 1450 provided in the height direction, from an upper portion in a downward direction.

When all the molten liquid is discharged, the inside of the barrier housing 1410 may be filled with air 1440. Therefore, the barrier 1400 may function as an air gap, e.g., an insulating member, after the phase change material 1430 is melted.

For example, according to an embodiment of the disclosure of this patent document, the barrier 1400 may have one of a first state (portion (a) of FIG. 9) in which in which the inside of the barrier housing 1410 is filled with the phase change material 1430, and a second state (portion (b) of FIG. 9) in which the inside of the barrier housing 1410 is filled with air 1440.

Based on the barrier 1400, when a thermal event occurs, the barrier 1400 in the first state may absorb heat generated from the battery module 1100 (or battery cell 1110) disposed on one side HS thereof on which the event occurred, to delay heat propagation to the battery module 1100 (or battery cell 1110) disposed on the other side CS thereof. Additionally, based on the barrier 1400, the barrier 1400 in the second state may function as an insulating member to delay heat propagation from the one side HS to the other side CS. Based on the barrier 1400, when the barrier 1400 is in the second state, a separation distance, equal to a thickness of the barrier 1400, may be ensured between the battery module 1100 (or battery cell 1110) disposed on the one side and the battery module 1100 (or battery cell 1110) disposed on the other side, to be thermally separated and blocked from each other.

The molten liquid may be discharged outside the barrier 1400 through the discharge hole 1450, and more specifically, may be discharged into an empty space of the battery module 1100 or the battery pack 1000. To this end, as illustrated in FIGS. 7 and 8, there may be a gap between the barrier 1400 and the battery module 1100 or the battery pack 1000 in a direction in which the molten liquid is discharged, e.g., in a direction in which the barrier 1400 extends. This may be formed. For example, a gap G1 may be formed between the first barrier 1400a and the pack housing 1200 of the battery pack 1000 in an extension direction of the first barrier 1400a, and the molten liquid discharged from the first barrier 1400a may be discharged in the gap G1 (first route). Likewise, a gap G2 may be formed between the second barrier 1400b and the busbar assembly 1120 in an extension direction of the second barrier 1400b, and the molten liquid discharged from the second barrier 1400b may be discharged into the gap G2 (second route).

As described above, the barrier housing 1410 may be formed of a material having high thermal conductivity, and thus the barrier 1400 may assist in heat management of the battery module 1100 and the battery pack 1000 under situations other than an event. To this end, it is desirable for the barrier 1400 to be disposed to contact battery cells 1110, battery modules 1100, but is not limited thereto, adjacent thereto.

The first barrier 1400a may be arranged such that one side thereof is in contact with the module housing 1150 of the battery module 1100 and the other side thereof is in contact with the cross beam 1222 or a module housing 1150 of an adjacent battery module 1100. Additionally, one side and the other side of the second barrier 1400b may be disposed in contact with adjacent battery cells 1110, respectively. In this case, a portion contacting the battery module 1100, the cross beam 1222, and the battery cell 1110 may be the barrier housing 1410 formed of a material having high thermal conductivity. Therefore, the barrier 1400 may assist in transferring heat to the battery module 1100 and the battery cell 1110 under situations other than an event.

For example, the barrier housing 1410 may be formed of a material having high thermal conductivity, for example, a metal material including at least one of stainless steel, aluminum, or iron, or a plastic engineering material.

Therefore, in a typical battery charging/discharging situation, the barrier 1400 may assist in heat management of the battery cell 1110 by transferring low-temperature heat capacity of the coolant flowing inside the cooling plate 1500 disposed on a bottom surface of the pack housing 1200 to the battery module 1100 having high thermal conductivity, as illustrated in FIG. 10, to cool the battery cell 1110. Since a heat dissipation material 1170 may be disposed or applied between the battery cell 1110 and the lower cover 1155, efficiency for heat management may be further improved.

As described above, since a structure that may delay heat propagation in each battery pack 1000 and battery module 1100, respectively, may be applied to a battery pack 1000 according to an embodiment of the disclosure of this patent document, safety may be improved under event situations due to heat.

A battery pack according to an embodiment of the disclosure of this patent document may improve safety under event situations due to heat.

## Claims

1. A battery pack comprising:
a pack housing including a beam partitioning an internal space;
a plurality of battery modules including a plurality of battery cells and accommodated in each of spaces partitioned by the beam of the pack housing; and
a barrier disposed in at least one an outside of the battery module and an inside of the battery module,
wherein the barrier includes:
a barrier housing;
a phase change material (PCM) inserted into an inside of the barrier housing and melting at a predetermined temperature or higher; and
a discharge hole provided in the barrier housing and through which the molten phase change material is discharged.

2. The battery pack of claim 1, wherein the barrier comprises:
a first barrier disposed between battery modules disposed adjacent to the internal space or between the battery module and the beam; and
a second barrier disposed between adjacent battery cells within the battery module.

3. The battery pack of claim 2, wherein the beam includes a cross beam partitioning the internal space in a length direction of the pack housing, and
wherein the first barrier is disposed between the cross beam and the battery module.

4. The battery pack of any one of claim 1 to 3, wherein the barrier has one of a first state in which the inside of the barrier housing is filled with the phase change material (PCM) and a second state in which the inside of the barrier housing is filled with air.

5. The battery pack of claim 2 or 3, wherein the barrier housing is formed of a metal material including at least one of stainless steel, aluminum, or iron, or a plastic engineering material.

6. The battery pack of claim 5, wherein one side of the first barrier is in contact with the battery module, and the other side of the first barrier is in contact with the battery module or the beam.

7. The battery pack of claim 5, wherein one side and the other side of the second barrier are in contact with adjacent battery cells, respectively.

8. The battery pack of claim 2, wherein the first barrier has a length, longer than a length of the second barrier, at least in a height direction of the battery cell.

9. The battery pack of any one of claim 2, 3, 5, 6, 7 and 8, wherein the discharge hole is provided as a plurality of discharge holes on both sides of the barrier in an extension direction thereof, respectively, in a height direction of the barrier.

10. The battery pack of claim 9, wherein a gap is formed between the first barrier and the pack housing in an extension direction of the first barrier.

11. The battery pack of claim 9, wherein the battery module includes a busbar assembly disposed on both sides of the battery cell in a length direction,
wherein a gap is formed between the second barrier and the busbar assembly in an extension direction of the second barrier.

12. The battery pack of any one of claim 1 to 11, wherein a cooling plate cooling the plurality of battery modules is further disposed between the plurality of battery modules and a bottom surface of the pack housing.

13. A battery module comprising:
a plurality of battery cells arranged in one direction;
a busbar assembly disposed on both sides of the battery cell in a length direction thereof; and
a barrier disposed between adjacent battery cells to separate some of the plurality of battery cells,
wherein the barrier includes:
a barrier housing;
a phase change material (PCM) inserted into an inside of the barrier housing and melting at a predetermined temperature or higher; and
a discharge hole provided in the barrier housing and through which the molten phase change material is discharged.

14. The battery module of claim 13, wherein the barrier is disposed such that the barrier housing is in contact with the adjacent battery cells,
wherein the barrier housing is formed of a metal material including at least one of stainless steel, aluminum, or iron, or a plastic engineering material.

15. The battery module of claim 13 or 14, wherein the barrier is extended in a length direction of the battery cell, and
wherein the discharge hole is provided as a plurality of discharge holes on both sides of the barrier in an extension direction thereof, respectively, in a height direction of the barrier.
